**Europäisches Patentamt**

**European Patent Office**

**Office européen des brevets**

(19)

(11) Veröffentlichungsnummer: **0 043 147**
**B2**

(12)
# NEUE EUROPÄISCHE PATENTSCHRIFT

(45) Veröffentlichungstag der neuen Patentschrift:
10.06.87

(51) Int. Cl.⁴: **F 02 F  3/08, F 16 J  1/00**

(21) Anmeldenummer: **81200572.6**

(22) Anmeldetag: **27.05.81**

(54) **Leichtmetall-Regelkolben für Brennkraftmaschinen.**

(30) Priorität: **01.07.80  DE 3024891**

(43) Veröffentlichungstag der Anmeldung:
**06.01.82 Patentblatt 82/1**

(45) Bekanntmachung des Hinweises auf die Patenterteilung:
**15.08.84 Patentblatt 84/33**

(45) Bekanntmachung des Hinweises auf die Entscheidung
über den Einspruch:
**10.06.87 Patentblatt 87/24**

(84) Benannte Vertragsstaaten:
**DE FR GB IT**

(56) Entgegenhaltungen:
**EP-A-0 030 399**
**DE-C-438 583**
**DE-C-738 948**
**FR-A-508 796**
**GB-A-153 202**
**GB-A-782 248**
**US-A-2 297 649**
**US-A-2 309 555**

**Buch: "Leichtmetallkolben für Fahrzeugmotoren"**
**von R. Krüger, Schmidt-Verlag Berlin 1937, S. 66-69**
**Buch: Nüral-Kolbenhandbuch 1972 von Alcan**
**Aluminiumwerke GmbH, Nürnberg, S. 117-119**
**Buch: "Leichtmetallkolben" von Everling, Müller,**
**Richter, VEB-Verlag Technik, Berlin 1953, S. 168**
(73) Patentinhaber: **KOLBENSCHMIDT**
**Aktiengesellschaft, Christian- Schmidt- Strasse**
**8/12 Postfach 1351, D-7107 Neckarsulm (DE)**

(72) Erfinder: **Steidle, Werner, Ing. (grad.), Rosenweg**
**4, D-7107 Bad Friedrichshall (DE)**
Erfinder: **Wacker, Erich, Dr.- Ing.,**
**Hegelmaierstrasse 3, D-7100 Heilbronn (DE)**

(74) Vertreter: **Rieger, Harald, Dr., Reuterweg 14,**
**D-6000 Frankfurt am Main (DE)**

EP 0 043 147 B2

LIBER, STOCKHOLM 1987

## Beschreibung

Gegenstand der Erfindung ist ein Leichtmetall-Regelkolben für Brennkraftmaschinen mit in den tragenden Kolbenschaftflächen im Bereich beidseitig der horizontalen Kolbenbolzenebene vorgesehener Aussparung, geschlossener Ausführung des oberen und unteren Endbereichs des Kolbenschafts und einem am oberen des Kolbenschafts eingegossenen Stahlregelglied.

Durch die Senkung des Gewichts von Bauteilen einer modernen Brennkraftmaschine, z. B. eines Otto-Motors, kann der Kraftstoffverbrauch verringert und somit ein nicht unbeachtlicher anteil zur Energieeinsparung geleistet werden. Außer dieser Forderung nach geringstmöglichem Gewicht werden an eine Brennkraftmaschinen hinsichtlich ihres Geräusch- und Schwingungsverhalfens wegen der gestiegenen Komfortansprüche hohe Anforderungen gestellt. Ein Teil dieser Enfwicklungsziele kann mit dem Einsatz von leichfen Kolben durch deren kleinere oszillierende Masse erreicht werden. Für den Kolbenkonstrukteur besteht die Aufgabe, leichte Kolbenbauarten zu entwickeln, die der modernen Brennkraftmaschinentechnik angepaßt sind. Eine Gewichtsreduzierung darf dabei nicht zu Lasten der Betriebsicherheit und Lebensdauer gehen.

An vielfach in der Serie verwendeten konventionellen Kolben sind zur Gewichtseinsparung am Kolbenschaft im Bereich dar horizontalen Kolbenbolzenebene die Bolzennaben möglichst weit zur Mitte verschoben. Die in der Kolbenbolzenebene verlaufende Kolbenschaftaußenkontur ist dabei kastenförmig gegenüber dem runden Kolbenschaft zurückgesetzt. Am Ende des Kolbenschafts ist dieser dann wiederum rund ausgeführt. Die Gewichtseinsparung gegenüber dem Vollschaftkolben entsteht durch die zur Mitte hin zurückgesetzten Kolbenschaftflächen sowie durch Verwendung eines kürzeren und damit leichteren Kolbenbolzens. Dieser konventionelle Kolben wird auch als "Kastenkolben" bezeichnet.

Für niedrige Kolbengewichte bei unverändert ausreichenden Festigkeitseigenschaften wurden in den letzten Jahren die Bolzennaben noch weiter zur Mitte hin verschoben. Der äußere Abstand der Bolzennaben beträgt lediglich noch 70 % des Kolbendurchmessers so daß ein sehr kurzer Kolbenbolzen eingesetzt werden kann der eine Gesamtlänge von 65 % des Kolbendurchmessers besitzt. Die äußere Breite der kastenförmigen Schaftabstützung wurde dabei um 10 bis 15% gegenüber dem vorstehend beschriebenen "Kastenkolben" verringert.

Die EP-A-30 399 (Veröffentiichungstag 17.6.81) beschreibt einen Leichtmetallkolben mit jeweils einem in den Kolbensschaftflächen in Höhe der Bolzennaben-angebrachten Querschlitz. Der jewelis von Bolzennabe zu Bolzennabe umlaufende Querschlitz erweitert sich von den tragenden Bereichen der Kolbenschaftflächen aus zu den Bolzennaben hin in den oberen und unteren Kolbenschaftteil hinein wobei der untere Schaftteil nur mit den Bolzennaben verbunden und im oberen Kolbenschaftteil ein Regelglied angeordnet ist. Durch diese Maßnahmen wird eine Gewichtsersparnis von 7 bis 10 % erzielt. Nachteilig kann jedoch in manchen Betriebszuständen sein, daß durch die bei dieser Kolbenbauart erhöhte Flächenpressung am Kolbenschaft ein erhohter Verschleiß des Kolbenschafts eintreten kann. Dies ist besonders auf der Druckseite der Fall, da dieser Bereich des Kolbenschafts die höheren Seitenkrafte aufzunehmen hat.

In Krüger, R.: Leichtmetallkolben für Fahrzeugmotoren, Schmidt-Verlag, Berlin 1937, Seiten 66 bis 69 sind Schlitzmantelkolben beschrieben, bei denen der Kolbenschaft durch Querschlitze in oder unter der untersten Ringnut vom Kolbenkopf getrennt ist und ein oder mehrere Längsschlitze an geeigneter Stelle des Kolbenschafts angeordnet sind. Die Querschlitze bewirken eine gewisse Regelwirkung, die Längsschlitze eine große Elastizität des Kolbenschafts. Die im Motorbetrieb auftretende Durchmesservergrößerung des Leichtmetalls wird durch die elastische Schaftverformung aufgenommen. Bei Schlitzmantelkolben kann das Laufspiel wegen der Ausweich- und Angleichmöglichkeit des Kolbenschafts relativ klein gehalten werden. Andererseits entstehen durch die Schlitzung lappenförmige Gebilde, die zwar die gewünschte Elastizität des Kolbenschafts ergeben, aber nach längerer Laufzeit infolge der vergleichsweise geringen Zeitstandfestigkeit des Leichtmetalls bei höherer Temperatur in ihrer Elastizität nachlassen und bleibend verformt werden. Die zunächst gute Kolbenführung verschlechtert sich und als Folge hiervon kann Kolbenklappern, gf. Fressen, An- und Abbrechen des Kolbenschaftes auftreten.

Es ist daher die Aufgabe der vorliegenden Erfindung, einem eventuell erhöhten Verschleiß unter dem Gesichtspunkt eines geringeren Gewichts des Leichtmetallkolbens vorzubeugen.

Die Lösung dieser Aufgabe besteht darin, daß nur in der tragenden Kolbenschaftfläche der Gegendruckseite eine von Bolzennabe zu Bolzennabe umlaufende, sich über wenigstens 30 % der Kolbenschaftlänge erstreckende, Aussparung vorgesehen ist.

Die höher belastete Kolbenschaftfläche besitzt entweder keine oder nur seitliche Aussparungen, die zwischen dem Hauptbereich der tragenden Kolbenschaftfläche und den Bolzennaben liegen.

Im Rahmen der weiteren Ausgestaltung der Erfindung erstreckt sich die Aussparung in axialer Richtung über 40 bis 55 % der Kolbenschaftlänge und in Umfangslänge über einen Bereich bis zu 120°. Damit die auf den Kolbenschaft wirkenden Seitenkräfte von dem unteren Endbereich des Kolbenschafts aufgenommen werden können, ist dieser auf der Innenseite mit einem versteifenden Bund ausgestattet.

Die Erfindung ist in der Zeichnung beispielhaft dargestellt und wird nachstehend erläutert:

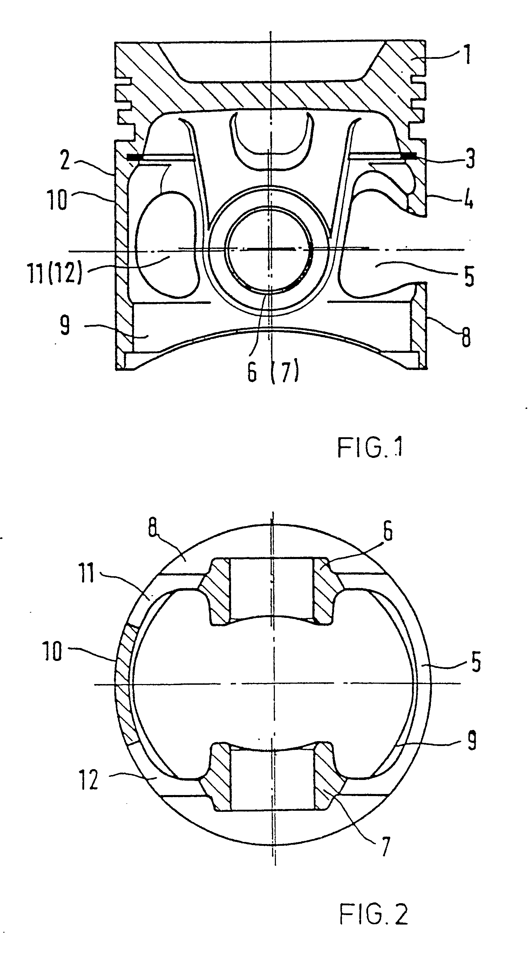

In Fig.1 ist ein Längsschnitt durch die Druck/Gegendruckebene eines Kastenkolbens mit minimalen Schaft- und Bodendicken dargestellt. Der Kolben besteht aus dem Kolbenkopf 1 und dem Kolbenschaft 2, wobei am oberen Rand des Kolbenschafts 2 ein Stahlringregelglied 3 eingegossen ist. In der tragenden Kolbenschaftfläche 4 der Gegendruckseite ist der Kolbenschaft 2 von einer Ausnehmung 5 durchbrochen, die sich über 45 % der Schaftlänge beidseitig der horizontalen Kolbenbolzenebene und über eine Umfangslänge von 100° von Bolzennabe 6 zu Bolzennabe 7 erstreckt. Auf der Innenseite des unteren Kolbenschaftbereiches 8 befindet sich ein Bund 9. Seitlich des Hauptbereichs der tragenden Kolbenschaftfläche 10 der Druckseite sind die Ausnehmungen 11, 12 angeordnet.

Fig. 2 zeigt einen Querschnitt durch die horizontale Kolbenbodenebene des Kolbens nach Fig. 1 mit zur Mitte hin zurückgesetzten Bolzennaben 6, 7.

Die mit der erfindungsgemäßen Kolbenbauart erzielten Vorteile bestehen darin, daß die Reibleistungsverluste um mehr als 3 % und das Kolbengewicht um 4 bis 6 % gesenkt werden, ohne daß Nachteile im Verschleiß und Ölverbrauchsverhalten in Kauf genommen werden müssen.

## Patentansprüche

1. Leichtmetall-Regelkolben für Brennkraftmaschinen mit in den tragenden Kolbenschaftflächen im Bereich beidseitig der horizontalen Kolbenbolzenebene vorgesehener Aussparung, geschlossener Ausführung des oberen und unteren Endbereichs des Kolbenschafts und einem am oberen Rand des Kolbenschafts eingegossenen Stahlregelglied, dadurch gekennzeichnet, daß nur in der tragenden Kolbenschaftfläche der Gegendruckseite eine von Bolzennabe (6) zu Bolzennabe (7) umlaufende, sich über wenigstens 30 % der Kolbenschaftlänge erstreckende, Aussparung (5) vorgeseben ist.

2. Leichtmetall-Regelkolben nach Anspruch 1, dadurch gekennzeichnet, daß die höher belastete Kolbenschaftfläche (10) Aussparungen (11, 12) zwischen dem Hauptbereich der tragenden Kolbenschaftfläche und den Bolzennaben (6, 7) besitzt.

3. Leichtmetall-Regelkolben für Brennkraftmaschinen nach den Ansprüchen 1 bis 2, dadurch gekennzeichnet, daß sich die Aussparung (5) über 40 bis 55 % der Kolbenschaftlänge erstreckt.

4. Leichtmetall-Regelkolben für Brennkraftmaschinen nach den Ansprüchen 1, 2 und 3, dadurch gekennzeichnet, daß sich die Aussparung (5) über eine Umfangslänge bis zu 120° erstreckt.

## Claims

1. An expansion-controlled light alloy piston for internal combustion engines, comprising a recess formed in the carrying surfaces of the skirt on both sides of the horizontal plane through the piston pin, wherein the upper and lower end portions of the skirt are closed and an expansion control member of steel is embedded in cast material at the top edge of the skirt, characterized in that a recess (5), which extends peripherally from piston pin boss (6) to piston pin boss (7) and extends over at least 30% of the length of the skirt, is provided only in the carrying skirt surface on the backpressure side.

2. An expansion-controlled light alloy piston according to claim 1, characterized in that the more highly loaded skirt aurface (10) is provided with recesses (11, 12) between the main portion of the carrying skirt surface and the piston pin bosses (6, 7).

3. An expansion-controlled piston for internal combustion engines according to claim 1 or 2, characterized in that the recess (5) extends over 40 to 55 % of the length of the skirt.

4. An expansion-controlled light alloy piston for internal combustion engines according to claims 1, 2 and 3, characterized in that the recess (5) has a peripheral length of up to 120°.

## Revendications

1. Piston autothermique en métal léger pour des moteurs à combustion interne, avec un évidement prévu dans la surface chargée de la jupe du piston dans la région des deux côtés du plan horizontal de l'axe du piston, un agencement fermé des régions d'extrémité supérieure et inférieure de la jupe du piston et un élément autothermique en acier coulé sur le bord supérieur de la jupe du piston, caractérisé en ce qu'un évidement (5), entourant le bossage d'axe (6) au bossage d'axe (7) et s'étendant sur au moins 30 % de la longueur de la jupe du piston, n'est prévu que dans la surface chargée de la jupe de piston, qui est du côté de contre-poussée.

2. Piston autothermique en métal léger suivant la revendication 1, caractérisé en ce que la surface de la jupe du piston (10), qui est la plus chargée, possède des évidements (11, 12) entre la région principale de la surface chargée de la jupe de piston et les bossages d'axe (6, 7).

3. Piston autothermique en métal léger pour des moteurs à combustion interne suivant les revendications 1 à 2, caractérisé en ce que l'évidement (5) s'étend sur 40 à 55 % de la longueur de la jupe de piston.

4. Piston autothermique en métal léger pour des moteurs à combustion interne suivant les revendications 1, 2 et 3, caractérisé en ce que l'évidement (5) s'étend sur une longueur périphérique allant jusqu'à 120°.

FIG.1

FIG.2